## Europäisches Patentamt

## European Patent Office

## Office européen des brevets

(19)

(11) Numéro de publication: **0 063 078**
**B1**

(12)
# FASCICULE DE BREVET EUROPEEN

(45) Date de publication du fascicule du brevet:
08.08.84

(51) Int. Cl.³: **B 64 C  27/00**

(21) Numéro de dépôt: **82400584.7**

(22) Date de dépôt: **31.03.82**

(54) Dispositif de suspension antivibratoire pour hélicoptère.

(30) Priorité: **10.04.81  FR 8107270**

(43) Date de publication de la demande:
**20.10.82 Bulletin 82/42**

(45) Mention de la délivrance du brevet:
**08.08.84 Bulletin 84/32**

(84) Etats contractants désignés:
**DE GB IT**

(56) Documents cités:
**FR - A - 2 232 481**
**FR - A - 2 363 737**
**FR - A - 2 402 808**
**FR - A - 2 474 996**

(73) Titulaire: **SOCIETE NATIONALE INDUSTRIELLE AEROSPATIALE Société dite:, 37 Boulevard de Montmorency, F-75781 Paris Cedex 16 (FR)**

(72) Inventeur: **Mouille, René Louis Villa"La Pinède", Le Coton rouge Chemin du Moulin de Testas, F-13100 Aix en Provence (FR)**

(74) Mandataire: **Barnay, André François et al, Cabinet Barnay 80 rue Saint-Lazare, F-75009 Paris (FR)**

BUNDESDRUCKEREI BERLIN

## Description

L'invention se rapporte à un dispositif de suspension antivibratoire pour la boîte de transmission principale d'un hélicoptère, comprenant deux supports déformables de forme générale allongée, disposés parallèlement entre eux et à l'axe longitudinal du fuselage de l'hélicoptère de part et d'autre de la boîte de transmission, à laquelle ils sont reliés, étant par ailleurs articulés chacun en deux points forts de la structure du fuselage et portant à chacune de leurs extrémités libres une masse battante, tandis que lesdits supports, leurs points d'articulation au fuselage et les masses battantes qu'ils portent sont disposés symétriquement par rapport au plan longitudinal ainsi qu'au plan transversal passant par l'axe du rotor de l'hélicoptère.

Un dispositif de suspension de ce genre est connu par la demande de brevet français 2 402 808. Dans ce dispositif, un ensemble de leviers lestés et de bras élastiques associés relie la boîte de transmission au fuselage de l'hélicoptère par un système d'appui comportant, pour chaque levier et bras élastique associé, deux articulations, la première reliant la boîte de transmission au levier autour d'un premier axe de pivotement et la deuxième reliant le fuselage au levier autour d'un deuxième axe de pivotement décalé par rapport au premier sur la longueur du levier, l'un des axes de pivotement étant situé pratiquement à l'lune des extrémités du levier. A cette paire de supports de structure complexe doivent en outre être adjoints des ressorts complémentaires pour éliminer les effets néfastes de certaines forces de vibrations apparaissant en raison du décalage entre les deux axes de pivotement et les points de transmission des forces élastiques.

Afin de simplifier un tel dispositif et de le rendre parfaitement apte à assurer le filtrage de toutes vibrations ainsi que le transfert au fuselage de la réaction du couple d'entraînement du rotor et des moments dynamiques en provenance de ce dernier, la présente invention a pour objet un dispositif de suspension du genre considéré, caractérisé par le fait que chaque support est constitué par un barreau de préférence rectiligne, fait d'une seule pièce et fixé rigidement dans sa partie centrale au fond de la boîte de transmission, ce barreau comportant des parties flexibles entre sa partie centrale et ses articulations aux points forts du fuselage, et, au delà de ces articulations, des parties relativement rigides, lestées, à leur extrémité, des masses battantes précitées, et qu'à cette paire de barreaux est associée une biellette de liaison verticale située sensiblement sur l'axe du rotor et reliée par articulations d'une part au fond de la boîte de transmission et d'autre part à la structure du fuselage, le dispositif de suspension étant essentiellement constitué par ladite paire de barreaux et ladite biellette et étant entièrement situé entre le fond de la boîte de transmission de l'hélicoptère et son fuselage.

Le dispositif selon l'invention présente l'avantage d'être simple, léger et peu coûteux. Il permet en outre de supprimer le jeu de barres obliques habituellement prévu entre le fuselage et la tête de la boîte de transmission pour maintenir en position cette dernière.

Dans une forme de réalisation préférée, les barreaux présentent dans leurs différentes parties une section de grosseur variable suivant les efforts à supporter et la flexibilité requise. Ces barreaux peuvent d'autre part être réalisés en matériau composite à base de fibres de verre longitudinales et de résine.

Du fait de son agencement, l'ensemble du dispositif décrit, assurant la liaison du rotor au fuselage d'un hélicoptère, filtre de façon efficace les excitations en moment provenant des vibrations engendrées par le rotor dans son propre plan de rotation. Ces excitations sont largement dominantes dans le cas des rotors comportant plus de deux pales, car les moments dynamiques introduisent dans les barreaux des flexions alternées qui impriment aux masses d'extrémité des déplacements relativement importants qui, à leur tour, engendrent des efforts d'inertie dont les réactions au droit des points de liaison des barreaux sur le fuselage sont de sens opposé aux réactions élastiques.

Par contre, du fait que les efforts dans l'axe du rotor — en particulier la portance du rotor — passent directement du fond de la boîte de transmission sur le fuselage par l'intermédiaire de la biellette précitée, les vibrations verticales ne sont pas filtrées, ce qui n'est pas particulièrement gênant dans le cas des rotors comportant plus de deux pales, du fait que, pour ces rotors, le niveau des excitations verticales est suffisamment faible pour ne pas nuire réellement au confort de l'hélicoptère.

Si l'on désire toutefois atténuer les efforts dynamiques verticaux transmis au fuselage pour parfaire le niveau vibratoire d'ensemble de l'hélicoptère, il est possible de compléter le dispositif de liaison de la boîte de transmission au fuselage en interposant entre l'extrémité inférieure de la biellette de sustentation et la structure résistante du fuselage un agencement annexe de filtrage. Celui-ci peut, être constitué par un barreau élastique disposé horizontalement, au centre duquel est articulée la biellette et qui peut fléchir dans un plan vertical sur deux supports fixés à la structure du fuselage et situés de part et d'autre du centre du barreau, ce dernier se prolongeant au delà de chacun de ses supports en formant deux leviers lestés d'une masse à leur extrémité. Cet agencement annexe est dimensionné pour transmettre les efforts verticaux statiques du fond de la boîte de transmission au fuselage et simultanément filtrer les efforts verticaux dynamiques du fait que ces derniers occasionnent, par flexion du barreau, des mouvements des masses d'extrémité qui, à leur tour, créent des efforts d'inertie dont les réactions au droit des fixations sur la structure sont de sens opposé aux réactions élastiques.

Les articulations de liaison de la biellette précitée au fond de la boîte de transmission et à la structure du fuselage — soit directement, soit par l'intermédiaire de l'agencement de filtrage mentionné — sont de préférence des articulations à rotule.

La description qui va suivre, en regard des dessins annexés à titre d'exemples non limitatifs, permettra de bien comprendre comment l'invention peut être mise en pratique.

Les fig. 1 et 2 représentent schématiquement, respectivement en élévation latérale et en plan, un dispositif de suspension selon l'invention.

La fig. 3 représente partiellement un exemple de réalisation pratique d'un tel dispositif, en coupe suivant la ligne III-III de la fig. 4.

La fig. 4 représente une coupe selon la ligne IV-IV de l'objet de la fig. 3.

La fig. 5 représente, à la manière de la fig. 1, un dispositif de suspension selon l'invention muni d'un agencement complémentaire de filtrage des vibrations verticales.

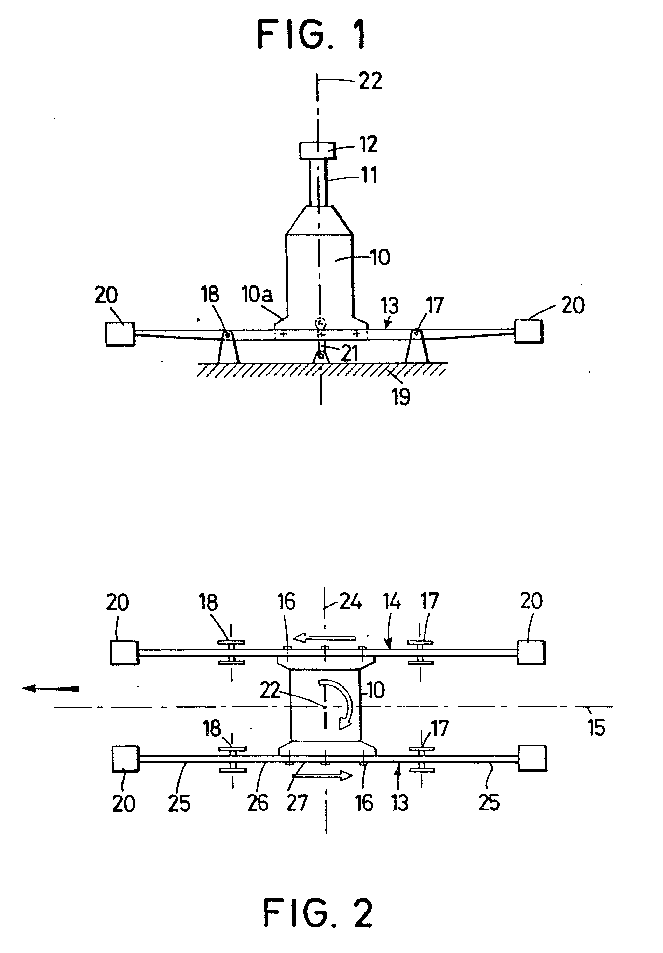

On voit sur les fig. 1 et 2 la boîte de transmission principale 10 d'un hélicoptère, disposée entre un ensemble de propulsion non représenté et l'arbre 11 du rotor dont le moyeu est schématisé en 12. L'embase 10a du carter de la boîte de transmission est fixée rigidement par ses bords latéraux à deux barreaux 13 et 14 parallèles entre eux et à l'axe longitudinal 15 de l'appareil. Ces deux barreaux sont dans le présent exemple liés rigidement à l'embase 10a de la boîte par des boulons 16 d'une part et sont articulés, d'autre part, chacun en deux points forts 17 et 18 de la structure 19 du fuselage de l'appareil. Ils sont par ailleurs équipés à leurs extrémités libres de masses battantes 20. La fig. 2 montre que l'agencement est entièrement symétrique par rapport au plan longitudinal défini par l'axe 15 et au plan transversal 24 passant par l'axe de rotation 22 du rotor, axe sur lequel sont alignés les éléments 10, 11 et 12.

En combinaison avec ces barreaux, la boîte de transmission est reliée à la structure 19 du fuselage au moyen d'une biellette de liaison articulée 21, disposée centralement entre le fond 10a de ladite boîte et ladite structure 19, sur l'axe 22 du rotor. Cette biellette 21 assure une liaison ferme et rigide dans le sens vertical et transmet directement à la structure 19 les efforts de portance du rotor de telle sorte que ceux-ci ne sollicitent pas les barreaux 13, 14 en flexion.

Les deux barreaux 13 et 14, réalisés de préférence en un matériau composite tel que des fibres de verre enrobées dans une résine thermodurcie, transmettent la réaction du couple d'entraînement du rotor de la boîte de transmission 10 à la structure 19 par traction-compression (fig. 2) et sans aucune rotation relative d'un barreau par rapport à l'autre. Par contre, les moments de basculement longitudinaux et transversaux de l'ensemble boîte 10, arbre 11 et moyeu 12 de rotor, dus aux efforts ou moments engendrés dans le plan du rotor, font fléchir les barreaux 13 et 14. Les moments dynamiques impriment aux masses d'extrémités 20 des déplacements importants qui, à leur tour, engendrent des efforts d'inertie dont les réactions aux points de fixation 17 et 18 des barreaux 13, 14 sur la structure 19 sont de sens opposé aux réactions élastiques.

On peut considérer ici que chacun des deux barreaux 13 et 14 est constitué par deux demi-barreaux identiques, symétriques par rapport au plan transversal 24. Chaque demi-barreau comprend trois parties, à savoir une partie 25 extérieure à l'appui 18, qui est équipée d'une masse battante 20 à son extrémité et offre une rigidité juste nécessaire pour porter cette dernière, une partie 26 comprise entre l'appui articulé 18 et la boîte de transmission 10, qui constitue la partie flexible et déformable sous l'action des efforts de basculement exercés par ladite boîte de transmission, et une partie centrale 27 de fixation au fond 10a de la boîte de transmission.

L'épaisseur et les matériaux constitutifs des parties 26 et 27 des barreaux sont choisis de manière que la partie 26 puisse fléchir sous l'effet des moments de basculement. La résistance de ces deux parties, situées entre le fond 10a de la boîte de transmission et l'appui sur la structure 19, doit être suffisante pour qu'elles puissent transmettre à la fois les efforts de traction ou de compression engendrés par le couple d'entraînement du rotor et supporter les moments de flexion et de basculement, statiques et dynamiques. Par contre, la partie extérieure 25 des barreaux doit supporter seulement les moments alternés dus aux forces d'inertie développées par la masse battante 20 qu'elle porte, et sa section est moins importante que la section des parties 26 et 27, de façon à permettre aux masses 20 d'importants mouvements relatifs, favorisant la création de forces d'inertie élevées.

Le dimensionnement des barreaux 13, 14, les distances entre le fond 10a de la boîte de transmission principale, les points d'articulation desdits barreaux à la structure 19 et les masses 20, de même que l'importance de ces masses sont choisis de telle sorte qu'il y ait équilibre entre les réactions de diverses natures aux points de fixation sur la structure.

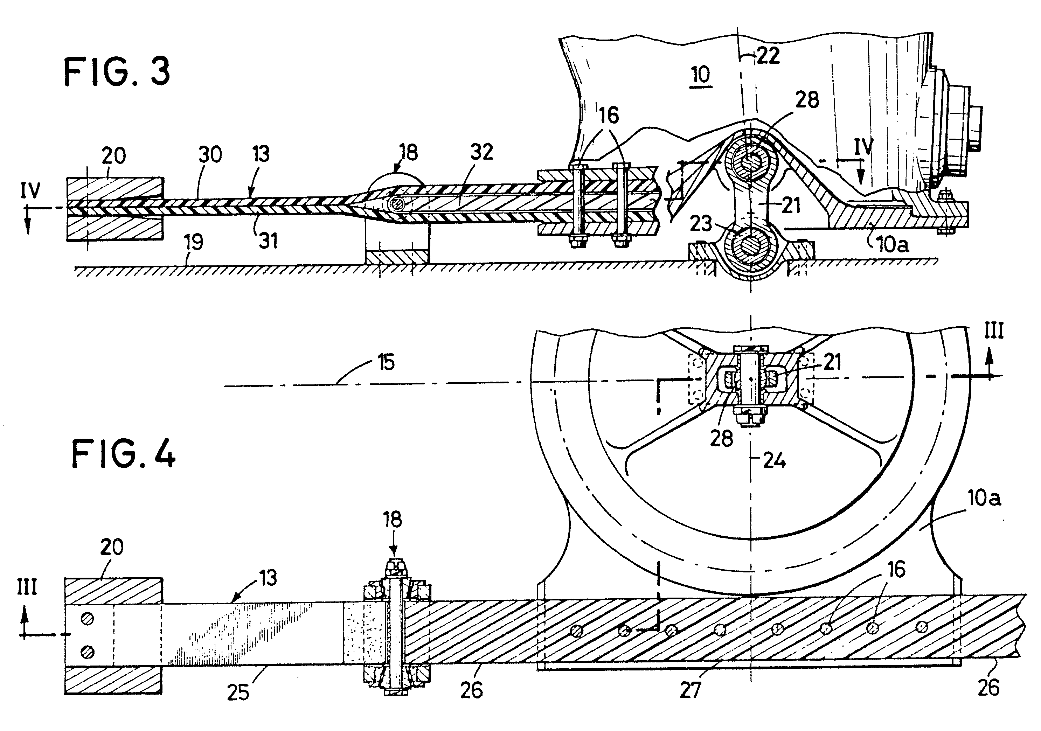

Dans l'exemple de réalisation pratique illustré par les fig. 3 et 4, on retrouve avec les mêmes références les éléments du dispositif de suspension représenté schématiquement aux fig. 1 et 2. Les barreaux 13 et 14 sont constitués de rubans 30, 31 en stratifils s'étendant d'une extrémité à l'autre d'un barreau. Entre les points d'appui 17 et 18 de chaque barreau sur la structure 19, ce dernier est renforcé par interposition entre les rubans plats 30 et 31 d'un remplissage 32 en »compound« fait de fibres de verre noyées dans de la résine.

Le biellette verticale 21 est articulée d'une part sur le fond 10a de la boîte de transmission 10 au moyen d'une rotule 28 et sur le dessus de la structure 19 également par l'intermédiaire d'une rotule 23.

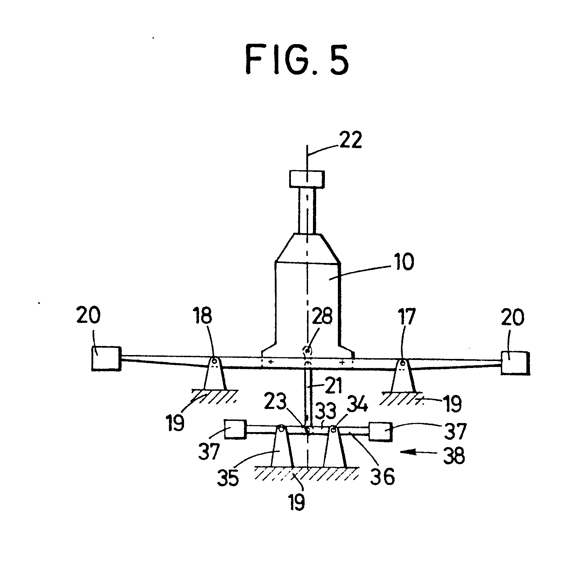

Dans le cas où il apparaît intéressant d'améliorer le niveau vibratoire en filtrant également les vibrations verticales provenant du rotor, on adjoint, comme indiqué sur la fig. 5, entre la base de la biellette verticale 21 et le fuselage 19 un ensemble 38 de filtrage annexe constitué par un barreau 33 réalisé par exemple en stratifié de fibres de verre et de résine, s'appuyant par deux paliers d'articulation 34 sur deux supports 35 fixés sur le fuselage 19, et prolongé de part et d'autre de ces supports par deux leviers 36 portant chacun à leur extrémité une masse battante 37, l'ensemble étant symétrique par rapport à l'axe 22.

Les efforts verticaux statiques en provenance du rotor, essentiellement la portance du rotor, sont encaissés en flexion par le barreau 33 et transmis au fuselage 19 par les deux supports 35. Les efforts verticaux dynamiques provoquent une flexion alternée du barreau 33 et une mise en mouvement oscillant des masses 37 autour des articulations 34 introduisant dans ces articulations des efforts d'inertie verticaux de sens opposé aux réactions élastiques, qui annulent pratiquement ces dernières, filtrant ainsi les vibrations verticales en provenance du rotor.

## Revendications

1. Dispositif de suspension antivibratoire pour la boîte de transmission principale d'un hélicoptère, comprenant deux supports déformables de forme générale allongée, disposés parallèlement entre eux et à l'axe longitudinal du fuselage de l'hélicoptère de part et d'autre de la boîte de transmission, à laquelle ils sont reliés, étant par ailleurs articulés chacun en deux points forts de la structure du fuselage et portant à chacune de leurs extrémités libres une masse battante, tandis que lesdits supports, leurs points d'articulation au fuselage et les masses battantes qu'ils portent sont disposés symétriquement par rapport au plan longitudinal ainsi qu'au plan transversal passant par l'axe du rotor de l'hélicoptère, caractérisé par le fait que chaque support est constitué par un barreau (13, 14) fait d'une seule pièce, fixé rigidement dans sa partie centrale (27) au fond (10a) de la boîte de transmission (10), comportant des parties flexibles (26) entre sa partie centrale (27) et ses articulations aux points forts (17, 18) du fuselage, et, au delà de ces articulations, des parties extérieures (25) relativement rigides, lestées à leur extrémité des masses battantes (20) précitées, et qu'à cette paire de barreaux (13 14) est associée une biellette de liaison (21) verticale située sensiblement sur l'axe (22) du rotor et reliée par articulations d'une part au fond (10a) de la boîte de transmission et d'autre part à la structure (19) de fuselage, le dispositif de suspension étant entièrement situé entre le fond de la boîte de transmission de l'hélicoptère et son fuselage.

2. Dispositif selon la revendication 1, caractérisé par le fait que les barreaux (13, 14) sont rectilignes.

3. Dispositif selon la revendication 1 ou 2, caractérisé par le fait que les barreaux (13, 14) présentent dans leurs différentes parties (25, 26, 27) une section de grosseur variable suivant les efforts à supporter et la flexibilité requise.

4. Dispositif selon l'une quelconque des revendications 1 à 3, caractérisé par le fait que les barreaux (13, 14) sont réalisé en matériau composite à base de fibres de verre longitudinales et de résine.

5. Dispositif selon l'une quelconque des revendications 1 à 4, caractérisé par le fait qu'entre la biellette de liaison (21) et la structure (19) du fuselage est interposé un ensemble (38) de filtrage des vibrations verticales.

6. Dispositif selon la revendication 5, caractérisé par le fait que ledit ensemble (38) est constitué par un barreau élastique (33) disposé horizontalement, au centre duquel est articulée la biellette (21) et qui peut fléchir dans un plan vertical sur deux supports (35) fixés à la structure (19) du fuselage et situés de part et d'autre du centre du barreau (33), ce dernier se prolongeant au delà de chacun de ses supports (35) en formant deux leviers (36) lestés d'une masse (37) à leur extrémité.

7. Dispositif selon l'une quelconque des revendications 1 à 6, caractérisé par le fait que les articulations de liaison de la biellette (21) sont des articulations à rotule (23, 28).

## Patentansprüche

1. Vibrationsfreie Aufhängevorrichtung für das Hauptübertragungsgehäuse eines Hubschraubers, mit zwei verformbaren, im wesentlichen langgestreckten Stützträgern, die parallel zueinander und zur Längsachse des Hubschrauberrumpfes beidseits des Übertragungsgehäuses angeordnet und an diesem angeschlossen sind, wobei andererseits jeder von ihnen in zwei Befestigungspunkten am Rahmen des Flugkörperrumpfes gelenkig angeschlossen ist und an seinen beiden freien Enden jeweils eine Schwingmasse trägt, wobei die Stützträger, ihre Gelenkpunkte am Flugkörperrumpf und die Schwingmassen, die sie tragen, symmetrisch zur Rotorachse des Hubschraubers sowohl in Längs- als auch in Querrichtung angeordnet sind, dadurch gekennzeichnet, daß jeder Stützträger von einem einstückigen Stab (13, 14) gebildet ist, der mit seinem Mittelteil (27) am Boden (10a) des Übertragungsgehäuses (10) fest angeschlossen ist und zwischen seinem Mittelteil (27) und seinen Befestigungspunkten (17, 18) flexible Bereiche (26) und jenseits der Gelenkpunkte äußere, verhältnismäßig steife Bereiche (25) aufweist, die an ihren Enden mit den Schwingmassen (20) versehen sind, und daß mit diesem Paar von Stäben (13, 14) ein vertikaler Verbindungsschwinghebel (21) verbunden ist, der nahe bei der Rotorachse (22) angeordnet und über Gelenke einerseits am Boden (10a) des Übertragungsgehäuses und andererseits am Rahmen (19) des Flugkörperrumpfes angeschlossen ist, wobei die Aufhängevorrichtung vollständig zwischen dem Boden des Übertragungsgehäuses des Hubschraubers und seines Flugkörperrumpfes angeordnet ist.

2. Vorrichtung nach Anspruch 1, dadurch gekennzeichnet, daß die Stäbe (13, 14) geradlinig ausgerichtet sind.

3. Vorrichtung nach Anspruch 1 oder 2, dadurch gekennzeichnet, daß die Stäbe (13, 14) in ihren verschiedenen Teilbereichen (25, 26, 27) einen Abschnitt abweichender Dicke entsprechend der Tragbelastung und der erforderlichen Nachgiebigkeit aufweisen.

4. Vorrichtung nach einem der Ansprüche 1 bis 3, dadurch gekennzeichnet, daß die Stäbe (13, 14) aus Material bestehen, das auf der Basis von in Längsrichtung verlaufenden Glasfasern und Harz zusammengesetzt ist.

5. Vorrichtung nach einem der Ansprüche 1 bis 4, dadurch gekennzeichnet, daß zwischen dem Verbindungsschwinghebel (21) und dem Rahmen (19) des Flugkörperrumpfes ein Dämpfungsglied (38) für vertikale Schwingungen angeordnet ist.

6. Vorrichtung nach Anspruch 5, dadurch gekennzeichnet, daß das Dämpfungsglied (38) von einem elastischen, horizontal angeordneten Stab (33) gebildet ist, in dessen Mitte der Verbindungsschwinghebel (21) angelenkt ist und der in einer senkrechten Ebene um zwei Stützträger schwingen kann, die am Rahmen (19) des Hubschrauberrumpfes beidseits der Mitte des Hebels (33) angeschlossen sind, wobei sich letzterer über seine Stützträger (35) hinaus erstreckt und zwei Hebel (36) bildet, die endseitig mit einer Masse (37) versehen sind.

7. Vorrichtung nach einem der Ansprüche 1 bis 6, dadurch gekennzeichnet, daß die Verbindungsgelenke des Verbindungsschwinghebels (21) als Kugelgelenke (23, 28) ausgebildet sind.

**Claims**

1. Anti-vibratory suspension device for the main gearbox of a helicopter, comprising two deformable supports of generally elongated shape disposed parallel to one and to the longitudinal axis of the fuselage of the helicopter on either side of the gearbox, to which they are connected, and each also connected to two strong points of the fuselage structure and each carrying a balance weight at their free ends, such supports, their points of connection to the fuselage and the balance weights they carry being disposed symmetrically with respect to the longitudinal plane and also to the transverse plane passing through the rotor axis of the helicopter, characterized in that each support is constituted by a bar (13, 14) made in one piece, rigidly fixed at its central part (27) to the base (10a) of the gearbox (10), comprising flexible parts (26) between its central part (27) and its connections to the strong points (17, 18) of the fuselage and, beyond such connections, relatively rigid outer parts (25) ballasted at their ends by means of the aforementioned balance weights (20) and that each pair of bars (13, 14) is associated with a vertical connecting rod (21) located substantially on the rotor axis (22) and connected by joints both to the base (10a) of the gearbox and also to the fuselage structure (19), the suspension device being entirely located between the base of the helicopter gearbox and its fuselage.

2. Device according to claim 1, characterized in that the bars (13, 14) are rectilinear.

3. Device according to claim 1 or 2, characterized in that the various parts (25, 26, 27) of the bars (13, 14) have a section of a size which is variable in accordance with the forces to be supported and the flexibility required.

4. Device according to any of claims 1 to 3, characterized in that the bars (13, 14) are made of a composite material comprising longitudinal glass fibres and resin.

5. Device according to any of claims 1 to 4, characterized in that an assembly (38) for filtering out vertical vibrations is interposed between the connecting rod (21) and the fuselage structure (19).

6. Device according to claim 5, characterized in that such assembly (38) is constituted by an elastic beam (33) which is disposed horizontally, which has the bar (21) connected to its centre and which can flex in a vertical plane on two supports (35) fixed to the fuselage structure (19) and located one on either side of the centre of the beam (33), the latter extending beyond each of its supports (35) in the form of two levers (36) ballasted by a weight (37) at the end.

7. Device according to any of claims 1 to 6, characterized in that the connection points of the rod (21) are rotary joints (23, 28).

# FIG. 1

# FIG. 2

7

FIG. 3

FIG. 4

# FIG. 5